(19) Europäisches Patentamt
European Patent Office
Office européen des brevets

(11) Publication number: **0 535 261 A1**

# (12) EUROPEAN PATENT APPLICATION

(21) Application number: **91116678.3**

(51) Int. Cl.[5]: **C08G 64/30**

(22) Date of filing: **30.09.91**

(43) Date of publication of application:
**07.04.93 Bulletin 93/14**

(84) Designated Contracting States:
**DE FR GB NL**

(71) Applicant: **DAICEL CHEMICAL INDUSTRIES, LTD.**
**No. 1-Banchi, Teppo-cho**
**Sakai-shi Osaka-fu 590(JP)**

(72) Inventor: **Sugano, Tatsuya**
**500 Kamiyobe**
**Yobe-ku, Himeji-hi(JP)**
Inventor: **Yamato, Tsutomu**
**1903 Kihama**
**Aboshi-ku, Himeji-shi(JP)**

(74) Representative: **Patentanwälte Grünecker, Kinkeldey, Stockmair & Partner**
**Maximilianstrasse 58**
**W-8000 München 22 (DE)**

## (54) Process for preparation of polycarbonate.

(57) The present invention relates to a process for producing a polycarbonate by melt-polycondensing at least one dihydric phenol and biphenyl carbonate in the presence of a catalyst selected from electron donative amine compounds and a catalyst selected from alkali metal compounds and alkaline earth metal compounds.

EP 0 535 261 A1

This invention relates to a process for preparing high molecular weight polycarbonates by melt polycondensation of dihydric phenols and bisphenyl carbonate in the presence of an electron donative amine compound and a catalyst selected from alkali metal compounds and alkaline earth metal compounds.

The high molecular weight polycarbonates of the invention are general-purpose engineering thermoplastics which have wide utility particularly for injection molding or in the field of glass sheets instead of window glass. Although interfacial polycondensation is generally effective for producing polycarbonates, it is disadvantageous in that toxic phosgene is used and chlorine ions remain in the formed polycarbonate products.

In order to overcome these disadvantages liquid trichloromethylchloroformate which is a dimer of phosgene is used instead of toxic phosgene, for interfacial polycondensation reaction with a specific type of dihydric phenol thereby preparing polycarbonates as disclosed in Japanese Laid-open Patent Application No. 63-182336. However, only 9,9-bis(4-hydroxyphenyl)fluorenes are mentioned as specific type of dihydric phenol. Moreover, it is described in Angew. Chem. 99, 922(1987) that polycarbonates can be obtained from 2,2-bis(4-hydroxyphenyl)propane by using triphosgene instead of toxic phosgene. However, the reaction mechanism of generating phosgene is also described therein.

Japanese Laid-open Patent Application No. 60-51719 discloses a process of preparing polycarbonates by use of a catalyst which is a combination of a nitrogen-containing basic compound and a boron compound. The use of the catalyst results in relatively light-colored polycarbonates, with an attendant problem that the catalyst has low polymerization activity.

Further, Japanese Laid-open Patent Application No. 2-124934 discloses the preparation of polycarbonates by melt polycondensation of aromatic organic dihydric compounds and carbonic acid diesters by use of a catalyst composed of a nitrogen-containing basic compound and an alkali metal compound or alkaline earth metal compound. However, as nitrogen-containing basic compounds there are only mentioned basic salts such as tetraalkylammonium hydroxides, ammonium hydroxides containing alkyl, aryl, aralkyl or the like groups, tertiary amines, secondary amines, primary amines, tetraalkyl borohalides or tetraalkylammonium tetraarylborates.

It is the object of the present invention to provide a process for producing a polycarbonate wherein a colorless and transparent product with a high number-average molecular weight is obtained.

Said object is achieved by a process for producing a polycarbonate by melt-polycondensing at least one dihydric phenol and biphenyl carbonate in the presence of a catalyst characterized in that a catalyst selected from electron donative amine compounds and a catalyst selected from alkali metal compounds and alkaline earth metal compounds is used.

The present inventors found that high molecular weight polycarbonates can be obtained without use of toxic phosgene and in a state substantially free of any chlorine ions, by stating bisphenyl carbonate and a dihydric phenol used as compounds capable of producing carbonate linkages to melt polycondensation in the presence of an electron donative amine compound and a compound selected from alkali metal compounds and alkaline earth metal compounds.

The dihydric phenol is preferably represented by the general formula (I), (II), (III) or (IV)

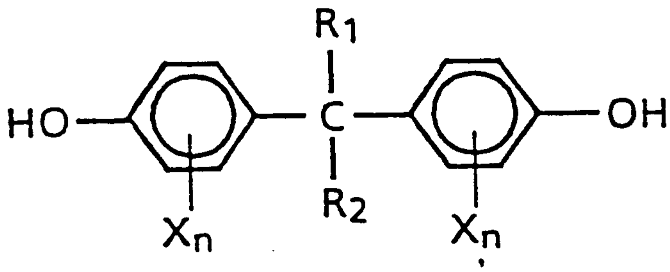

(I)

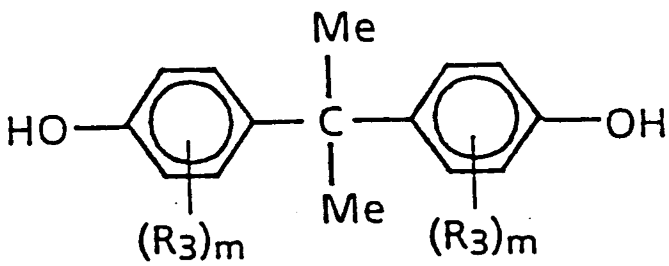

(II)

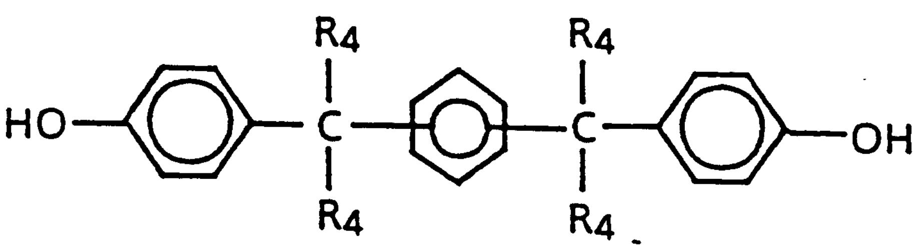

(III)

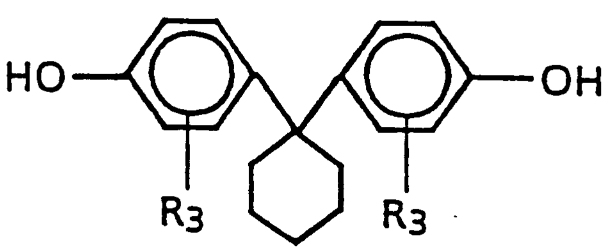

(IV)

wherein $R_1$, $R_2$, $R_3$ and $R_4$ are independently hydrogen, a linear or branched alkyl group having 1 - 8 carbon atoms, or a phenyl group, X represents a halogen atom and n is 0 - 4 and m is 1 - 4.

Typical examples of the electron donative amine compounds usable in the present invention include N,N-dimethyl-4-aminopyridine, 4-diethylaminopyridine, 4-pyrrolidinopyridine, 4-aminopyridine, 2-aminopyridine, 2-hydroxypyridine, 2-methoxypyridine, 4-methoxypyridine, 4-hydroxypyridine, 2-dimethylaminoimidazole, 2-methoxyimidazole, 2-mercaptoimidazole, 2-aminopyridine, aminoquinoline, benzimidazole, imidazole, 2-methylimidazole, 4-methylimidazole, diazabicyclooctane (DABCO) and 1,8-diaza-bicyclo[5,4,0]-7-undecene (DBU) and the like.

Typical examples of the alkali metal compounds include sodium hydroxide, potassium hydroxide, lithium hydroxide, sodium hydrogencarbonate, potassium hydrogencarbonate, lithium hydrogencarbonate, sodium carbonate, potassium carbonate, lithium carbonate, sodium acetate, potassium acetate, lithium acetate, sodium stearate, potassium stearate, lithium stearate, sodium borohydride, lithium borohydride, potassium borohydride, sodium phenylboronate, sodium benzoate, potassium benzoate, lithium benzoate, disodium hydrogenphosphate, dipotassium hydrogenphosphate, dilithium hydrogenphosphate, disodium salt, dipotassium salt and dilithium salt of bisphenol A, sodium salt potassium salt and lithium salt of phenol, and the like.

Typical examples of the alkaline earth metal compounds include calcium hydroxide, barium hydroxide, magnesium hydroxide, strontium hydroxide, calcium hydrogencarbonate, barium hydrogencarbonate, magnesium hydrogencarbonate, strontium hydrogencarbonate, calcium carbonate, barium acetate, magnesium acetate, strontium acetate, calcium stearate, barium stearate, magnesium stearate, strontium stearate, and the like.

Typical examples of the dihydric phenol are indicated below. The bisphenols of the general formula (I) include

2,2-bis-(4-hydroxyphenyl)propane,
2,2-bis-(4-hydroxyphenyl)butane,
2,2-bis-(4-hydroxyphenyl)4-methylpentane,
2,2-bis-(4-hydroxyphenyl)octane, 4,4 -dihydroxy-2,2,2-triphenylethane,
2,2-bis-(3,5-dibromo-4-hydroxyphenyl)-propane and the like.

The bisphenols of the general formula (II) include

2,2-bis-(4-hydroxy-3-methylphenyl)propane,
2,2-bis-(4-hydroxy-3-isopropylphenyl)propane,
2,2-bis-(4-hydroxy-3-sec-butylphenyl)propane,
2,2-bis-(3,5-dimethyl-4-hydroxyphenyl)propane,
2,2-bis-(4-hydroxy-3-tertiary-butylphenyl)propane, and the like.

The bisphenols of the general formula (III) include 1,1 -bis-(4-hydroxyphenyl)-p-diisopropylbenzene, 1,1 -bis-(4-hydroxyphenyl)-m-diisopropylbenzene, and the like.

The bisphenols of the general formula (IV) include 1,1-bis-(4-hydroxyphenyl)cyclohexane.

Two or three or more more dihydric phenols selected from those of the general formulae (I), (II), (III) and (IV) may be used in combination to prepare copolymerized polycarbonates.

The process of the invention is carried out by a melt polycondensation reaction between a dihydric phenol, such as bisphenol A, and bisphenyl carbonate by the use of a catalyst selected from electron donative amine compounds and a catalyst selected from alkali metal compounds and alkaline earth metal compounds.

The temperature at which the reaction proceeds is generally in the range of from 100°C to 300°C. Preferably, the temperature is in the range of from 130°Cto 280°C. A temperature lower than 130°C results in a slow reaction speed. With temperatures exceeding 300°C, side reactions are liable to occur.

The electron donative amine compounds used as the catalyst should be used in amounts of from $10^{-1}$ mole to $10^{-5}$mole, preferable $10^{-2}$ mole to $10^{-4}$ mole, per 1 mole of the dihydric phenol present in the reaction system. If the amount is less than $10^{-5}$ mole, the catalytic activity is low so that the polymerization velocity becomes slow. With amounts exceeding $10^{-1}$ mole, the rate of the catalyst left in the resultant polycarbonate becomes high, and the physical properties of the polycarbonate are deteriorated.

The amount of the alkali metal compound or alkaline earth metal compound used as the other catalyst should be from $10^{-2}$ mole to $10^{-6}$ mole, preferable from $10^{-3}$ mole to $10^{-6}$ mole per 1 mole of the dihydric phenol present in the reaction system. If the amount is less than $10^{-6}$ mole, the catalytic activity is so small that the degree of polymerization of the resultant polycarbonate does not reach a desired level. With amounts exceeding $10^{-2}$ mole, the remaining rate of the catalyst in the poylcarbonate becomes high, deteriorating the physical properties of the polycarbonate.

The bisphenol carbonate should be used in an equimolar amount relative to the dihydric phenol present in the reaction system. For the preparation of high molecular weight polycarbonate, 1 mole of the carbonate compound and 1 mole of the dihydric phenol are in general reacted with each other. Where bisphenyl carbonate is used, 2 moles of phenol are formed by the reaction. The 2-mole phenol is removed out of the reaction system by distillation.

The present invention is further illustrated by way of examples.

Example 1

22.8 g (0.1 mole) of 2,2-bis(4-hydroxyphenyl)propane, 0.164g ($2x10^{-2}$ moles) of 2-methylimidazole, 0.0082 g($1 \times 10^{-4}$ mole) of potassium acetate and 21.4 g (0.1 mole) of bisphenyl carbonate were added and agitated in nitrogen at 180°C for 1 h, followed by heating while gradually reducing the pressure and polycondensation reaction finally to 13,33 Pa (0.1 Torr), at 250°C for 1 h. While distilling off the formed phenol a colorless, transparent polycarbonate was obtained. The measurement of the viscosity-average molecular weight gave $\overline{M}v = 27,600$.

The procedure of measuring the viscosity-average molecular weight was as follows: the intrinsic viscosity [$\eta$] of a methylene chloride solution at 20°C was measured by use of an Ubbelohde viscometer and the viscosity-average molecular weight, Mv, was calculated according to the following equation:

$$[\eta] = 1.11 \times 10^{-4} (\overline{M}v)^{0,82}$$

Example 2

Under the same conditions as in Example 1 0.0122 g ($1 \times 10^{-4}$ mole) of 4-dimethylaminopyridine was added instead of 2-methylimidazole, to which 0.01 g ($1x10^{-4}$ mole) of calcium carbonate was further added and agitated in nitrogen for 2 h followed by a polycondensation reaction in the same manner as in Example 1, thereby obtaining 1 colorless, transparent polycarbonate. The measurement of the viscosity-average molecular weight gave $\overline{M}v = 27,000$. The glass transition temperature was 150°C.

Example 3

11.4 g (50 mole%) of 2,2-bis(4-hydroxyphenyl)propane, 17,0 g (50 mole%) of 2,2-bis(4-hydroxy-3-tertiarybutylphenyl)propane, 0.0122 g ($1 \times 10^{-4}$ mole) of 4-dimethylaminopyridine and 0.00066 g ($1 \times 10^{-5}$ mole) of lithium acetate were agitated in nitrogen for 24 h, followed by a polycondensation reaction in the same manner as in Example 1, thereby obtaining a colorless, transparent polycarbonate. The polycarbonate had a viscosity-average molecular weight of $\overline{M}v = 24,500$ and a glass transition temperature of 128°C.

Comparative Example

Under the same conditions as in Example 3, pyridine was used instead of 4-dimethylaminopyridine, to which 0.00066 g ($1 \times 10^{-5}$ mole) of lithium acetate was further added, followed by a similar treatment. The resultant polycarbonate had a viscosity-average molecular weight of $\overline{M}v = 6000$. Although the product was a kind of polycarbonate, it had a low molecular weight and was not suitable for practical utility.

**Claims**

**1.** A process for producing a polycarbonate by melt-polycondensing at least one dihydric phenol and biphenyl carbonate in the presence of a catalyst **characterized in that** a catalyst selected from electron donative amine compounds and a catalyst selected from alkali metal compounds and alkaline earth metal compounds is used.

**2.** The process of claim 1 wherein the dihydric phenol is represented by the following formula (I), (II), (III) or (IV)

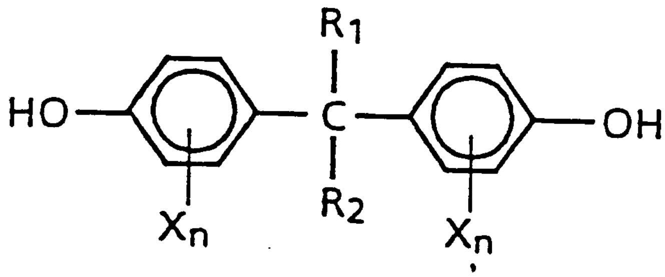

(I)

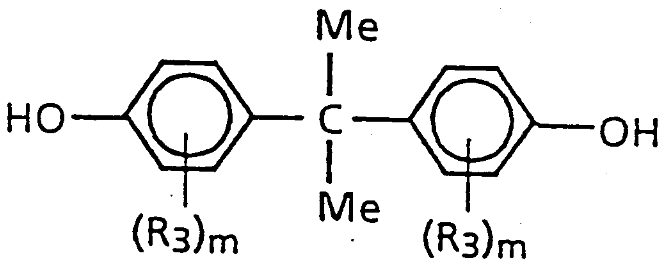

(II)

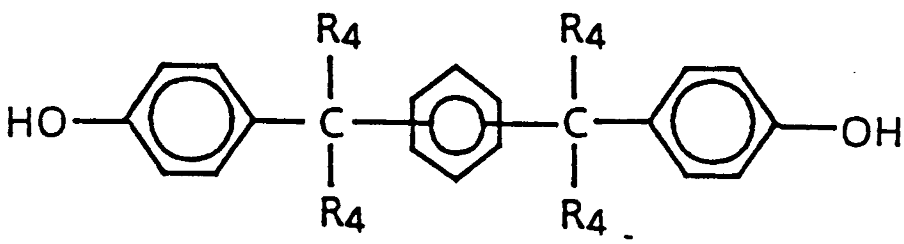

(III)

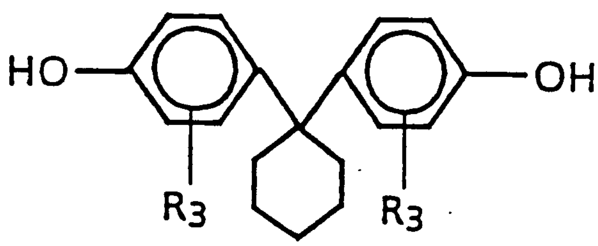

(IV)

wherein $R_1$, $R_2$, $R_3$ and $R_4$ are independently hydrogen, a linear or branched alkyl group having 1 - 8 carbon atoms, or a phenyl group, X represen a halogen atom, and n is 0 - 4 and m is 1 - 4.

**3.** The process of claim 1 or 2 wherein the electron donative amine compound is selected from N,N-dimethyl-4-aminopyridine, 4-diethylaminopyridine, 4-pyrrolidinopyridine, 4-aminopyridine, 2-aminopyridine, 2-hydroxypyridine, 2-methoxypyridine, 4-methoxypyridine, 4-hydroxypyridine, 2-dimethylaminoimidazole, 2-methoxyimidazole, 2-mercaptoimidazole, 2-aminopyridine, aminoquinoline, benzimidazole, imidazole, 2-methylimidazole, 4-methylimidazole, diazabicyclooctane (DABCO) and 1,8-diaza-bicyclo[5,4,0]-7-undecene (DBU).

**4.** The process of any of claims 1 to 3 wherein the alkali metal compound is selected from sodium hydroxide, potassium hydroxide, lithium hydroxide, sodium hydrogencarbonate, potassium hydrogencarbonate, lithium hydrogencarbonate, sodium carbonate, potassium carbonate, lithium carbonate, sodium acetate, potassium acetate, lithium acetate, sodium stearate, potassium stearate, lithium stearate, sodium borohydride, lithium borohydride, potassium borohydride, sodium phenylboronate, sodium benzoate, potassium benzoate, lithium benzoate, disodium hydrogenphosphate, dipotassium

hydrogenphosphate, dilithium hydrogenphosphate, disodium salt, dipotassium salt and dilithium salt of bisphenol A and sodium salt, potassium salt and lithium salt of phenol.

**5.** The process of any of claims 1 to 4 wherein the alkaline earth metal compound is selected from calcium hydroxide, barium hydroxide, magnesium hydroxide, strontium hydroxide, calcium hydrogencarbonate, barium hydrogencarbonate, magnesium hydrogencarbonate, strontium hydrogencarbonate, calcium carbonate, barium acetate, magnesium acetate, strontium acetate, calcium stearate, barium stearate, magnesium stearate and strontium stearate.

**6.** The process of any of claims 1 to 5 wherein the electron donative amine compound is used in an amount of from $10^{-1}$ to $10^{-5}$ mole per 1 mole of the dihydric phenol.

**7.** The process of any of claims 1 to 5 wherein the electron donative amine compound is used in an amount of from $10^{-2}$ to $10^{-4}$ mole per 1 mole of the dihydric phenol.

**8.** The process of any of claims 1 to 7 wherein the alkali metal compound or alkaline earth metal compound is used in an amount of from $10^{-2}$ to $10^{-6}$ mole per 1 mole of the dihydric phenol.

**9.** The process of any of claims 1 to 7 wherein the alkali metal compound or alkaline earth metal compound is used in an amount of from $10^{-3}$ to $10^{-5}$ mole per 1 mole of the dihydric phenol.

European Patent Office

# EUROPEAN SEARCH REPORT

Application Number

EP 91 11 6678

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 382 250 (DAICEL CHEMICAL INDUSTRIES) * the whole document * | 1-9 | C 08 G 64/30 |
| Y | EP-A-0 274 092 (DAICEL CHEMICAL INDUSTRIES) * claims 1-4; page 6, lines 6-22; examples 3-5 * | 1-9 | |
| A | US-A-4 316 981 (D.J. BRUNELLE) * claims 1,5-7; column 1, line 41 - column 2, line 26 * | 1-3 | |

TECHNICAL FIELDS SEARCHED (Int. Cl.5)

C 08 G

The present search report has been drawn up for all claims

| Place of search | Date of completion of the search | Examiner |
|---|---|---|
| BERLIN | 29-05-1992 | VOIGTLAENDER R O J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)